# EUROPÄISCHE PATENTANMELDUNG

(11) **EP 1 308 595 A2**
(43) Veröffentlichungstag der Anmeldung: **07.05.2003**
(21) Anmeldenummer: 02024240.0
(22) Anmeldetag: 31.10.2002
(51) Int. Cl.: E05F 15/00, E05D 13/00, F16P 3/00

(54) **Einklemmschutz**

(30) Priorität: 02.11.2001 DE 10154038
(71) Anmelder: EDAG Engineering + Design Aktiengesellschaft, 36039 Fulda (DE)
(72) Erfinder: Walkling, Andreas, 55411 Bingen (DE)
(74) Vertreter: Schlagwein, Udo, Dipl.-Ing.

(57) **Zusammenfassung**

Automatisch arbeitende Maschinen befinden sich häufig hinter sogenannten Schutzfenstern, die erst geschlossen werden müssen, damit die Maschinen in Gang gesetzt werden können. Um ein Einklemmen von Gegenständen durch das Fensterblatt (10) zu verhindern, ist eine Bremseinrichtung (25) vorgesehen. Dieses besteht aus zwei Bremsschuhen (40, 41), die gegen eine schwimmend gelagerte Bremsleiste (28) schwenkbar sind und von einer Auslöseeinrichtung (27) an der Unterseite des Fensterblattes (10) betätigt werden.

## Beschreibung

Die Erfindung bezieht sich auf einen Einklemmschutz für ein Schutzfenster mit einer von einem Fensterrahmen umfassten Fensteröffnung und mit einem von einem Motor angetriebenen und am Fensterrahmen geführten Fensterblatt, das zum Schließen der Fensteröffnung absenkbar ist, und mit einer Bremse, die mittels einer Auslöseeinrichtung betätigt wird, wenn sich im Schließweg ein Hindernis befindet.

Schutzfenster mit einem Einklemmschutz werden z.B. im Maschinenbau verwendet. Eine automatisch arbeitende Maschine befindet sich hinter einem Schutzfenster, das nur geöffnet wird, wenn Werkzeug oder Werkstücke ausgewechselt oder Reparatur- oder Wartungsarbeiten durchgeführt werden müssen. So lange die Maschine die vorgesehene Aufgabe automatisch durchführt, ist das Schutzfenster geschlossen, so dass weder ein mit einer Verletzungsgefahr verbundener Eingriff in die laufende Maschine erfolgen kann noch Teile aus dem Maschinenbereich vor das Schutzfenster gelangen können.

Es hat sich gezeigt, dass es trotz aller Vorsichtsmaßnahmen immer wieder vorkommt, dass sich Personen beim Schließen des Schutzfensters verletzen: Arme können eingeklemmt oder gequetscht werden, wenn diese nicht schnell genug zurückgezogen werden. Die Schutzfenster sind daher mit einem Einklemmschutz versehen. Dazu wird mit einem entsprechenden Sensor festgestellt, ob sich noch ein Hindernis im Schließweg befindet. Wenn ein solches erkannt wird, wird der Antrieb des Fensterblattes gestoppt. In einigen Fällen reicht diese Maßnahme aber nicht aus, da trotz Abschalten des Antriebs sich das Fensterblatt wegen seiner trägen Masse noch ein Stück weiter bewegt.

Die Erfindung beruht somit auf der Aufgabe, einen schnell wirkenden Eingriffsschutz für ein Schutzfenster darzustellen. Zur Lösung der Aufgabe sieht die Erfindung einen Einklemmschutz mit dem Oberbegriff des Anspruchs 1 mit den weiteren Merkmalen vor, dass die Bremse eine Bremsleiste am Fensterrahmen und zu beiden Seiten der Bremsleiste je einen um eine Schwenkachse kippbar an dem Fensterblatt gelagerten Bremsschuh aufweist, der unterhalb der Schwenkachse eine an die Bremsleiste anlegbare Bremsfläche besitzt.

Neben dem Abschalten des Antriebs wird somit eine aktive Bremse vorgesehen, die aufgrund ihrer Konstruktion in der Lage ist, rasch zu reagieren. Dazu ist sie selbstverstärkend ausgebildet, was dadurch erzielt wird, dass die an die Bremsleiste anlegbare Bremsfläche des Bremsschuhes unterhalb der Schwenkachse angeordnet ist. Das hat zur Folge, dass sich der Bremsschuh noch enger an die Bremsleiste anlegt, wenn das mit ihr verbundene Fensterblatt sich noch weiter in Schließrichtung bewegen sollte.

Die Bremsschuhe sind mit einem Bügel gekoppelt, der in einer ersten Stellung die Bremsflächen von der Bremsleiste entfernt hält. Dieser Bügel ist mit einer Auslöseeinrichtung gekoppelt, die den Bügel und damit die Bremsschuhe freigibt, wenn beim Schließen des Fensterblattes sich ein Hindernis in der Fensteröffnung befindet. Dazu ist der Bügel am Fensterrahmen in einer Führung verschiebbar gehalten.

Um ein leichtes Ansprechen der Bremse zu bewirken, ist am Fensterblatt eine Wippe angeordnet, wobei ein Wippenarm mit dem Bügel und der andere Wippenarm mit einer Auslösestange verbunden ist, die als Ausgleichsgewicht zum Bügel und den Bremsschuhen wirkt. Die Auslösestange ist wiederum mit einer Auslöseeinrichtung verbunden. Diese mechanisch wirkende Auslöseeinrichtung muss, da die Auslösestange, der Bügel und die anteiligen Gewichte der Bremsschuhe im Gleichgewicht stehen, keine hohen Stellkräfte aufbringen.

Die Auslöseeinrichtung besteht vorzugsweise aus einer an der Unterkante des Fensterblattes angeordneten und gegen diese verschiebbare Kontaktleiste, die mit der Auslösestange zusammenwirkt.

Berührt die Kontaktleiste einen Widerstand, so wird sie gegen die Unterkante des Fensterblattes gedrückt und hebt dabei die Auslösestange an, wodurch diese die Wippe umlegt und die Bremseinrichtung in Eingriff gelangt.

Damit das Fensterblatt mit der Bremseinrichtung und die Kontaktleiste unabhängig voneinander montiert werden können, ist die Auslösestange lediglich an die Kontaktleiste anlegbar. Mittels einer Justierschraube lässt sich Spielfreiheit einstellen, so dass bei nicht betätigter Kontaktleiste der Kopf der Auslösestange an dieser anliegt. Die Trennung zwischen der Auslösestange und der Auslöseeinrichtung hat den Vorteil, dass die Bremswirkung nicht nachlässt, wenn der Druck auf die Auslöseeinrichtung aufhört. Die Bremse läßt sich nur durch einen manuellen Eingriff oder eine Ansteuerung des Motors, mit der das Schutzfenster wieder in die Offenstellung gefahren wird, lösen.

Vorzugsweise sind die Bremsschuhe an der Oberseite des Fensterblattes und die Bremsleiste oberhalb der Öffnung im Bereich der Parkposition des Fensterblattes angeordnet.

Vorzugsweise ist die Bremsleiste seitlich schwimmend gelagert und an einem Federpaket abgestützt. Dies hat zur Folge, dass bei einer Abbremsung die Bremsleiste ein kurzes Stück ruckartig bewegt wird, was zum Betätigen eines Schalters genutzt werden kann, wodurch die Drehrichtung des Motors zum Öffnen des Fensters umgekehrt wird.

Im Folgenden wird anhand eines Ausführungsbeispiels die Erfindung näher erläutert. Dazu zeigen
- Fig.1: ein Gestell mit einer Fensteröffnung,
- Fig.2: mit einer Antriebsvorrichtung gekoppeltes Fensterblatt, das an dem Gestell nach Figur 1 verfahrbar gehalten ist,
- Fig.3: eine Bremseinrichtung für das Fensterblatt,
- Fig.4: eine Detaildarstellung der Lagerung der Bremsschuhe für die in Figur 3 dargestellte Bremseinrichtung.

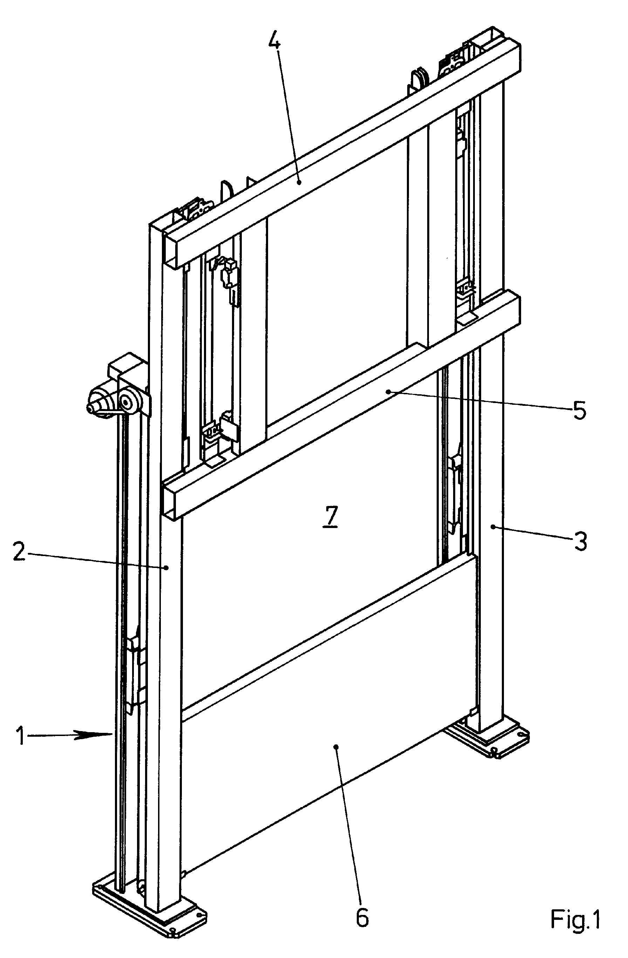

Figur 1 zeigt ein Gestell 1 mit zwei Pfosten 2, 3, die im oberen Bereich über Querbalken 4, 5 miteinander verbunden sind, während der untere Bereich durch eine Wand 6 abgedeckt ist. Zwischen dem unteren Querbalken 5 und der Wand 6 befindet sich eine Fensteröffnung 7. Hinter dem Gestell 1 befindet sich eine Maschine, zu der man durch das Schutzfenster hindurch Zugang hat. Zur Vermeidung von Unfällen mit der Maschine kann die Fensteröffnung 7 durch ein Fensterblatt 10 geschlossen werden. Mit entsprechenden Schaltern kann erreicht werden, dass die Maschine nur in Betrieb genommen werden kann, wenn die Fensteröffnung 7 geschlossen ist.

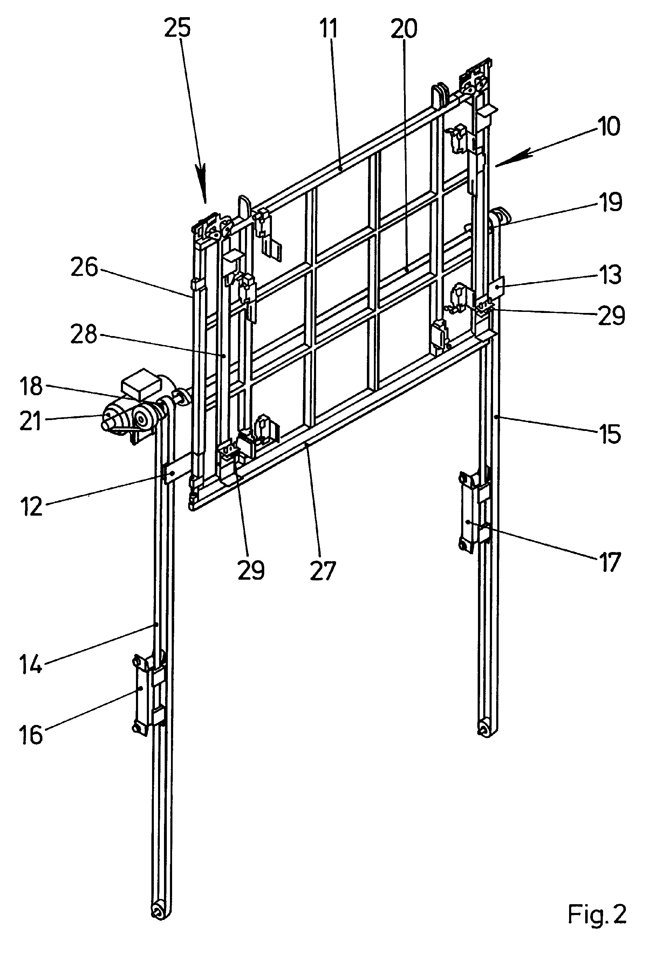

Figur 2 zeigt das Fensterblatt 10. Dieses besteht aus einem Gerippe 11, das durch eine hier nicht dargestellte geschlossene Platte oder eine durchsichtige Scheibe flächig geschlossen ist. Die Ausdehnung des Fensterblattes 10 entspricht der Ausdehnung der Fensteröffnung 7, so dass diese vollständig vom Fensterblatt 10 geschlossen werden kann. Dazu ist dieses verfahrbar zwischen den beiden Pfosten 2, 3 angeordnet und kann von einer obere Position (Parkposition), in der sich das Fensterblatt 10 hinter den beiden Querbalken 4, 5 befindet, in eine unteren Position (Schließposition), in der die Fensteröffnung 7 geschlossen ist, verfahren werden. Zu diesem Zweck ist das Fensterblatt 10 an beiden Seiten über zwei Laschen 12, 13 mit je einem umlaufenden Band 14, 15 verbunden, an dem entsprechende Gegengewichte 16, 17 befestigt sind. Diese Bänder 14, 15 und die Gegengewichte 16, 17 laufen in den hohl ausgeführten Pfosten 2, 3. Die beiden Bänder 14, 15 sind jeweils über eine untere und obere Rolle gelenkt, wobei die oberen Rollen 18, 19 über eine Welle 20 miteinander verbunden sind, die von einem Elektromotor 21 angetrieben wird, der am oberen Enden des einen Pfostens 2 befestigt ist.

Auf der Oberseite des Fensterblattes 10 befindet sich eine Bremseinrichtung 25, die über eine Auslösestange 26, die in einer Führung an der Seite des Fensterblattes 10 verläuft, mit einer Auslöseeinrichtung 27 an der Unterseite des Fensterblattes 10 gekoppelt ist. Diese Elemente werden in der nächsten Figur näher beschrieben. An den hier nicht gezeigten Querbalken ist eine Bremsleiste 28 seitlich schwimmend befestigt, die von der Bremseinrichtung 25 zur Abbremsung des Fensterblattes 10 erfasst wird. Die schwimmende Lagerung lässt einen Toleranzausgleich zu und bewirkt eine Zentrierung hinsichtlich der Bremseinrichtung 25. In Längsrichtung ist die Bremsleiste 28 außerdem gegen ein Federpaket 29 abgestützt, was im Zusammenspiel mit einem Schalter zum Umschalten des Elektromotors 21 führt.

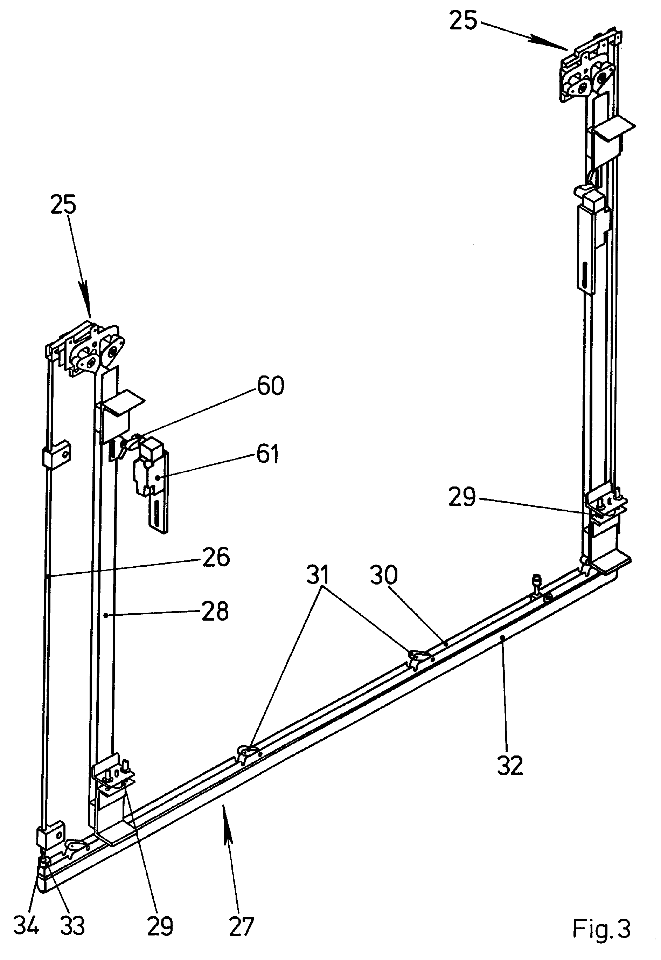

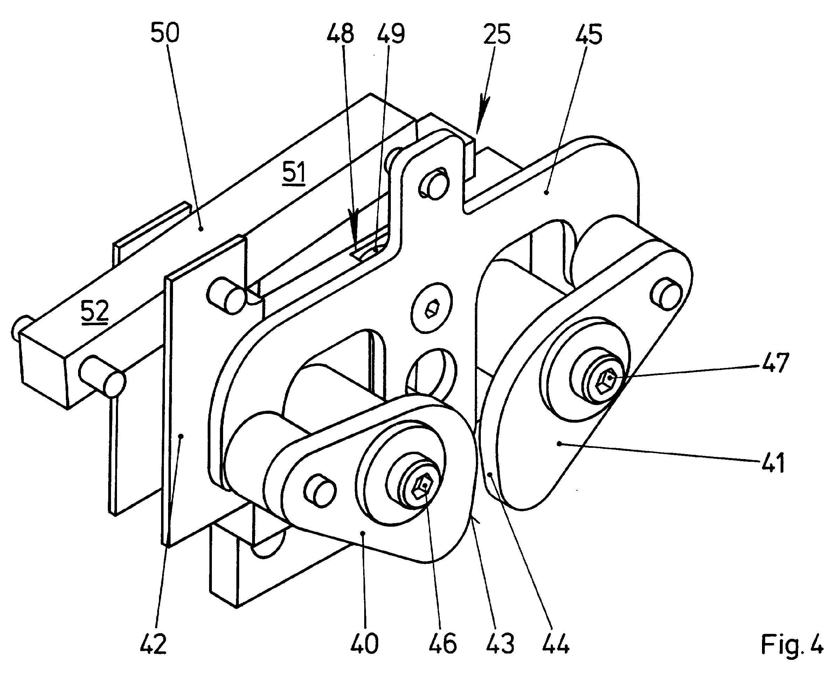

Die komplette Bremseinrichtung 25 ist in der Figur 3 näher dargestellt. Die Auslöseeinrichtung 27 besteht aus einer Kontaktleiste 30, die über mehrere Hebel 31 an der Unterseite des Fensterblattes 10 befestigt ist. Die Unterseite der Kontaktleiste 30 ist mit einem Gummiprofil 32 versehen. An der einen Seite der Kontaktleiste 30, die seitlich über das Fensterblatt 10 hinausragt, befindet sich ein Stempel 33, an dem der Kopf 34 der Auslösestange 26 anliegt. Der Kopf 34 wird von einer Schraube gebildet, die zu Justierzwecken in das untere Ende der Auslösestange 26 derart eingeschraubt ist, dass der Schraubenkopf auf dem Stempel 33 aufliegt. Die Schraube wird nun soweit eingeschraubt, dass ihr Kontakt zum Stempel 33 spielfrei ist. Das obere Ende der Auslösestange 26 ist mit der Bremseinrichtung 25 gekoppelt, die im Detail in der Figur 4 näher dargestellt ist.

Demnach besteht die Bremseinrichtung 25 aus zwei Bremsschuhen 40, 41 in Form von Nocken, die spiegelsymmetrisch zueinander um Schwenkachsen 46, 47 drehbar an einem Träger 42 befestigt sind, der mit dem oberen Rand des Fensterblattes 10 verbunden ist. Zwischen den beiden Bremsschuhen 40, 41 verläuft die in dieser Figur nicht dargestellte Bremsleiste, so dass Bremsflächen 43, 44 an den Bremsschuhen 40, 41 an die Bremsleiste 28 angelegt werden, wenn die Bremsschuhe 40, 41 um die Schwenkachsen 46, 47 kippen. Da die Bremsleiste 28 seitlich schwimmend gelagert ist, können die Bremsschuhe 40, 41 sie zwischen sich zentrieren, so dass der Anpressdruck auf beiden Seiten gleich ist. Die Bremsschuhe 40, 41 werden von einem Bügel 45 gehalten, dessen zentraler Teil an dem Träger 42 verschiebbar gehalten ist, wozu dort eine Nut 48 mit Hinterschnitten angeordnet ist, in der ein mit einem pilzförmigen Kopf versehener Bolzen 49 am Bügel 45 hindurchgleitet.

Der Bügel 45 ist mit dem einen Wippenarm 51 einer Wippe 50 verbunden, die schwenkbar an dem Träger 42 gehalten ist, während der andere Wippenarm 52 mit dem oberen Ende der Auslösestange 26 gekoppelt ist. Wie man der Darstellung entnehmen kann, wird - wenn der eine Wippenarm 52 von der Auslösestange 26 nach oben gedrückt wird - der andere Wippenarm 51 nach unten gedrückt, wodurch die beiden Bremsschuhe 40, 41 gegensinnig verschwenkt werden und dabei die Bremsleiste 28 zwischen sich einschließen.

Wie man erkennt, befinden sich die beiden Bremsflächen 43, 44 unterhalb der Schwenkachsen 46, 47, so dass, wenn sich das mit der Bremseinrichtung 25 verbundene Fensterblatt 10 gegenüber der Bremsleiste 28 nach unten verschiebt, die Bremsschuhe 40, 41 sich derart an der Bremsleiste 28 abwickeln, dass sich der Druck auf die Bremsleiste 28 erhöht und damit die Reibkraft erhöht wird. In diesem Sinne handelt es sich um eine selbst verstärkende Bremse.

Wie oben schon erwähnt, ist die Bremsleiste auf einem relativ harten Federpaket 29 abgestützt. Dies hat zur Folge, dass die Bremsleiste 28 beim Abbremsen ruckartig ein kurzes Stück nach unten in Schließrichtung gezogen wird. Diese Bewegung kann zur Betätigung eines Schalters genutzt werden, mit dem die Drehrichtung des Elektromotors 21 umgekehrt wird, um das Schutzfenster in Öffungsrichtung zu bewegen. Um dies zu realisierenbefindet sich an der Bremsleiste 28 noch ein Nocken 60, der mit einem Schalter 61 an einer mit den Querbalken 4, 5 verbundenen Strebe zusammenwirkt. Der Schalter 61 wird durch den Nocken 60 betätigt, wenn sich die Bremsleiste (28) beim Abbremsen ruckartig gegen die Kraft des Federpakets 29 nach unten bewegt.
Das in den Figuren dargestellte Schutzfenster arbeitet wie folgt. Zum Schließen des Schutzfensters wird der Elektromotor 21 mit der entsprechenden Drehrichtung angetrieben, so dass das Fensterblatt 10 aus einer Parkstellung hinter den beiden Querbalken 4, 5 nach unten fährt und damit die Fensteröffnung 7 verschließt. Zum Öffnen des Fensters wird der Elektromotor 21 im umgekehrten Drehsinn angetrieben.

Wenn sich beim Schließen des Fensterblattes 10 in der Fensteröffnung 7 ein Hindernis befindet, stößt dies gegen die Auslöseeinrichtung 27, wodurch die Kontaktleiste 30 relativ zum Fensterblatt 10 nach oben gedrückt wird und dabei auch die Auslösestange 26 betätigt. Dadurch wird die Bremseinrichtung 25 wie vorgehend beschrieben betätigt, wobei die Bremsleiste 28 zwischen den Bremsschuhen 40, 41 eingeklemmt und ruckartig in Längsrichtung bewegt wird. Weiterhin hat dieser Aufbau zur Folge, dass die aus den trägen Massen des Fensterblattes 10 und der Gegengewichte 16, 17 herrührende Bewegungsenergie von der Bremseinrichtung 25 aufgenommen wird, so dass nur die geringe Bewegungsenergie der Kontaktleiste 30 und der Auslösestange 26 von dem Hindernis im Schließweg aufgenommen werden muss. Evtl. noch auftretende kleinere Verschiebungen werden durch das Gummiprofil 32 abgefangen.

Wegen des selbstverstärkenden Effektes bleibt die Bremswirkung auch erhalten, wenn der Druck auf die Kontaktleiste 30 verschwindet. Das Gewicht der Auslösestange ist nicht in der Lage, die Bremse zu lösen. Dies muss vielmehr mit einem manuellen Eingriff erfolgen.

### Bezugszeichenliste

- 1: Gestell
- 2: Pfosten
- 3: Pfosten
- 4: Querbalken
- 5: Querbalken

- 6: Wand
- 7: Fensteröffnung
- 10: Fensterblatt

- 11: Gerippe
- 12: Lasche
- 13: Lasche
- 14: Band
- 15: Band

- 16: Gegengewicht
- 17: Gegengewicht
- 18: Rolle
- 19: Rolle
- 20: Welle

- 21: Elektromotor
- 25: Bremseinrichtung
- 26: Auslösestange
- 27: Auslöseeinrichtung
- 28: Bremsleiste
- 29: Federpaket
- 30: Kontaktleiste

- 31: Hebel
- 32: Gummiprofil
- 33: Stempel
- 34: Kopf
- 40: Bremsschuh

- 41: Bremsschuh
- 42: Träger
- 43: Bremsfläche
- 44: Bremsfläche
- 45: Bügel

- 46: Schwenkachse
- 47: Schwenkachse
- 48: Nut
- 49: Bolzen
- 50: Wippe

- 51: Wippenarm
- 52: Wippenarm

- 60: Nocken
- 61: Schalter

## Patentansprüche

1. Einklemmschutz für ein Schutzfenster mit einer von einem Fensterrahmen umfassten Fensteröffnung und mit einem von einem Motor angetriebenen und am Fensterrahmen geführten Fensterblatt (10), das zum Schließen der Fensteröffnung absenkbar ist, und mit einer Bremse, die mittels einer Auslöseeinrichtung (27) betätigt wird, wenn sich im Schließweg ein Hindernis befindet, **dadurch gekennzeichnet, dass** die Bremse eine Bremsleiste (28) am Fensterrahmen und zu beiden Seiten der Bremsleiste (28) je einen um eine Schwenkachse (46, 47) kippbar an dem Fensterblatt (10) gelagerten Bremsschuh (40, 41) aufweist, der unterhalb der Schwenkachse (46, 47) eine an die Bremsleiste (28) anlegbare Bremsfläche (43, 44) besitzt.

2. Einklemmschutz nach Anspruch 1, **dadurch gekennzeichnet, dass** die Bremsschuhe (40, 41) mit einem Bügel (45) verbunden sind, der mit der Auslöseeinrichtung (27) gekoppelt ist.

3. Einklemmschutz nach Anspruch 1, **dadurch gekennzeichnet, dass** der Bügel (45) am Fensterrahmen in einer Führung verschiebbar gehalten ist.

4. Einklemmschutz nach Anspruch 2 oder 3, **dadurch gekennzeichnet, dass** am Fensterblatt (10) eine Wippe (50) angeordnet ist, wobei ein Wippenarm (51) mit dem Bügel (45) und der andere Wippenarm (52) mit einer Auslösestange (26) verbunden ist, die als Ausgleichsgewicht zum Bügel (45) und den Bremsschuhen (40, 41) wirkt.

5. Einklemmschutz nach Anspruch 1, **dadurch gekennzeichnet, dass** die Auslöseeinrichtung (27) aus einer an der Unterkante des Fensterblattes (10) angeordneten und gegen diese verschiebbare Kontaktleiste (30) besteht, die mit der Auslösestange (26) zusammenwirkt.

6. Einklemmschutz nach Anspruch 6, **dadurch gekennzeichnet, dass** der Wippenarm (52) für die Auslösestange (26) kleiner ist als der Wippenarm (51) für den Bügel (45).

7. Einklemmschutz nach Anspruch 4, **dadurch gekennzeichnet, dass** die Kontaktleiste (30) gegen die Auslösestange (26) anlegbar ist.

8. Einklemmschutz nach einem der vorhergehenden Ansprüchen, **dadurch gekennzeichnet, dass** die Bremsschuhe (40, 41) an der Oberseite des Fensterblattes (10) und die Bremsleiste (28) oberhalb der Öffnung im Bereich der Parkposition des Fensterblattes (10) verläuft.

9. Einklemmschutz nach einem der vorhergehenden Ansprüchen, **dadurch gekennzeichnet, dass** die Bremsleiste (28) seitlich schwimmend gelagert und in Längsrichtung gegen ein Federpaket (29) abgestützt ist.

10. Einklemmschutz nach Anspruch 9, **dadurch gekennzeichnet, dass** die Bremsleiste (28) mit einem Nocken (60) zur Betätigung eines Schalters (61) versehen ist.
